# EUROPEAN PATENT SPECIFICATION

(11) **EP 1 897 826 B1**
(45) Date of publication and mention of the grant of the patent: **29.04.2009**
(21) Application number: 06780636.4
(22) Date of filing: 23.06.2006
(51) Int. Cl.: B65G 47/69

(54) **DISTRIBUTING/ARRANGING SYSTEM OF AGRICULTURAL AND STOCK-BREEDING PRODUCT**
SYSTEM ZUR VERTEILUNG/ANORDNUNG VON PRODUKTEN AUS LANDWIRTSCHAFT UND VIEHZUCHT
SYSTÈME DE DISTRIBUTION ET DE RANGEMENT DE PRODUITS AGRICOLES ET D ÉLEVAGE

(30) Priority: 30.06.2005 JP 2005192928
(43) Date of publication of application: 12.03.2008
(73) Proprietor: Nabel Co., Ltd., Kyoto-shi Kyoto 601-8444 (JP)
(72) Inventor: NAMBU, Tatsuo, Kyoto-shi, Kyoto 601-8444 (JP)
(74) Representative: Materne, Jürgen
(86) International application number: PCT/JP2006/312599
(87) International publication number: WO 2007/004440

(56) References cited:
- JP-A- 2003 206 016
- JP-A- 2003 206 016
- JP-B1- 48 006 269
- JP-U- 03 064 921
- JP-U- 58 004 529
- US-A- 2 980 229
- US-A1- 2004 200 696

## Description

### TECHNICAL FIELD

The present invention relates to a distributing and arranging device for agricultural and livestock products, and more specifically, to a distributing and arranging device for agricultural and livestock products for dividing randomly supplied eggs, fruits, vegetables or the like into predetermined lines, according to the preamble of claim 1.

### BACKGROUND ART

Eggs laid at a laying house, as a kind of an agricultural and livestock product, are transported to outside of the laying house by a supply conveyor provided therein, and during transport, divided into a predetermined number of, for example, six or twelve lines in a width direction perpendicular to the direction of transport. Then, the divided eggs are sent into a processing device in the state where the eggs are divided that performs a predetermined process such as a washing process, a drying process and a grading process. Smooth and efficient division of eggs transported by the supply conveyor is necessary in order to make full use of the processing ability of the processing device.

Since the number of eggs laid at the laying house varies depending on variations among individual chickens or conditions such as season, the number of transported eggs also varies. In addition, asymmetry of the outer shape of eggs causes the eggs to be randomly transported on the supply conveyor. Therefore, in some cases, in dividing eggs, the eggs may not be evenly divided into a plurality of lines or may not be smoothly divided due to congestion of eggs.

Congestion of eggs means a state where the eggs are concentrated at a particular line to be locked or contact each other to be piled up. Occurrence of such a phenomenon prevents smooth supply of eggs to the processing device, interrupting the process by the processing device. In addition, eggs located upstream in the direction of transport may exert pressure on eggs located downstream to cause damage or breakage of eggs.

In order to solve such problems, for example, Japanese Patent Laying-Open No. 2003-206016 (Patent Document 1) discloses an egg distributing and arranging device according to the preamble of claim 1 including a sensor for sensing a degree of congestion of eggs transported by a predetermined conveyor, and proposes a method for controlling a driving speed of the predetermined conveyor based on a signal of the sensor.
Patent Document 1: Japanese Patent Laying-Open No. 2003-206016

### DISCLOSURE OF THE INVENTION

### PROBLEMS TO BE SOLVED BY THE INVENTION

With a conventional egg distributing and arranging device, however, there is a problem as described below. Specifically, since eggs have been already congested when the sensor senses congestion of the eggs on the conveyor, it has been difficult to reliably eliminate congestion of eggs.

The present invention has been made to solve the problem. An object of the present invention is to provide a distributing and arranging device for agricultural and livestock products for dividing agricultural and livestock products without congestion for feeding them into a predetermined processing device.

### MEANS FOR SOLVING THE PROBLEMS

A distributing and arranging device for agricultural and livestock products according to the present invention is directed to a distributing and arranging device for agricultural and livestock products for dividing agricultural and livestock products supplied by a supply conveyor into predetermined lines according to the preamble of claim 1 as described by the appended claim 1.

With this configuration, each of transport ability Q1 of the first conveyor and transport ability Q3 of the third conveyor is higher than transport ability Q2 of the second conveyor and transport ability Q2 of the second conveyor is set to be equal to transport and processing ability Q4 of the processing device, so that transport ability Q2 of the second conveyor determines the transport ability of the distributing and arranging device for agricultural and livestock products. The second conveyor transports agricultural and livestock products in a state where the force of the second conveyor body to limit movement of the agricultural and livestock products on the second conveyor is set to be stronger than the force of the first conveyor body to limit movement of the agricultural and livestock products on the first conveyor.
Accordingly, when agricultural and livestock products beyond transport ability Q2 of the second conveyor are fed into the first conveyor, the first conveyor can serve as a buffer to store the agricultural and livestock products beyond transport ability Q2 of the second conveyor on the first conveyor, preventing the second conveyor from feeding the agricultural and livestock products beyond transport ability Q2 of the second conveyor into the third conveyor. As a result, on the third conveyor that has transport ability Q3 higher than that of the second conveyor, when dividing the agricultural and livestock products into the predetermined lines arranged in the width direction, congestion, locking, or piling up of the agricultural and livestock products caused by transport of a large amount of the agricultural and livestock products can be reliably reduced, significantly reducing damage or breakage of the agricultural and livestock products. Accordingly, feeding of the agricultural and livestock products beyond the transport and processing ability Q4 into the processing device is eliminated so that the processing device can perform a predetermined process smoothly and efficiently.

Preferably, the first conveyor includes a sorting portion for sorting the agricultural and livestock products in the width direction that are randomly supplied by the supply conveyor,

This enables the agricultural and livestock products arranged in the width direction on the first conveyor to be transported by the second conveyor while substantially maintaining the state where the products are arranged in the width direction, and fed into the third conveyor. As a result, the agricultural and livestock products can be evenly divided on the third conveyor, without concentration at a particular line.

In addition, the second conveyor preferably includes a function to transport the agricultural and livestock products in the state where movement of the agricultural and livestock products with respect to the second conveyor body is limited in the direction of transport.

On the second conveyor, this reduces movement of a particular agricultural and livestock product due to movement of its preceding and following agricultural and livestock products, maintaining the state where the agricultural and livestock products are arranged in the width direction.

Preferably, the first conveyor body includes a mesh belt and the second conveyor body includes a bar conveyor.

### BRIEF DESCRIPTION OF THE DRAWINGS

Fig. 1 is a top view of an egg distributing and arranging device according to an embodiment of the present invention.
Fig. 2 is a side view of the egg distributing and arranging device shown in Fig. 1 in the embodiment.
Fig. 3 is a partial perspective view showing a first conveyor of the egg distributing and arranging device shown in Fig. 1 in the embodiment.
Fig. 4 is a partial perspective view showing a second conveyor of the egg distributing and arranging device shown in Fig. 1 in the embodiment.
Fig. 5 is a partial side view showing a state where eggs are transported by the second conveyor shown in Fig. 4 in the embodiment.
Fig. 6 is a partial perspective view showing a third conveyor of the egg distributing and arranging device shown in Fig. 1 in the embodiment.
Fig. 7 is a partial plan view showing a first state to illustrate an operation to sort eggs in the first conveyor of the egg distributing and arranging device shown in Fig. 1 in the embodiment.
Fig. 8 is a partial plan view showing a second state to illustrate an operation to sort eggs in the first conveyor of the egg distributing and arranging device shown in Fig. 1 in the embodiment.
Fig. 9 is a first plan view to illustrate an operation to transport eggs by the egg distributing and arranging device shown in Fig. 1 in the embodiment.
Fig. 10 is a second plan view to illustrate an operation to transport eggs by the egg distributing and arranging device shown in Fig. 1 in the embodiment.
Fig. 11 is a partial perspective view showing a second conveyor according to a modification of the egg distributing and arranging device in the embodiment.
Fig. 12 is a partial perspective view showing a second conveyor according to another modification of the egg distributing and arranging device in the embodiment.

### DESCRIPTION OF THE REFERENCE SIGNS

1 first conveyor, 1 a mesh belt, 1b sorting portion, 1c sensor, 2 second conveyor; 2a bar conveyor, 2b rubber belt, 2c synchronous belt, 3 third conveyor, 3a mesh belt, 3b guide plate, 3c sensor, 4 control portion, 10 egg arranging and distributing device, 20 supply conveyor, 20a supply conveyor body, 30 processing device, 41 first extending portion, 42 second extending portion, 43 third extending portion, 44 shaft portion, E egg.

### BEST MODES FOR CARRYING OUT THE INVENTION

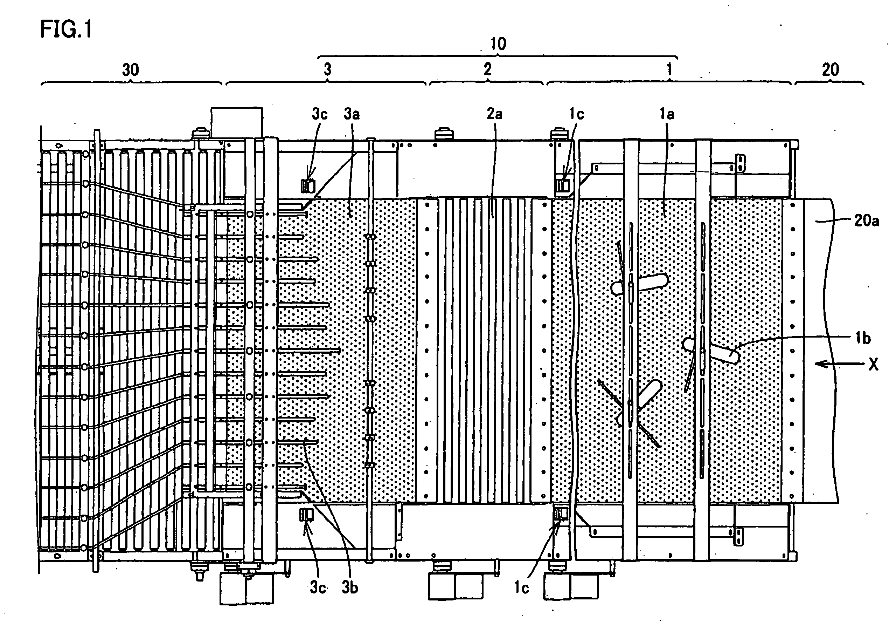

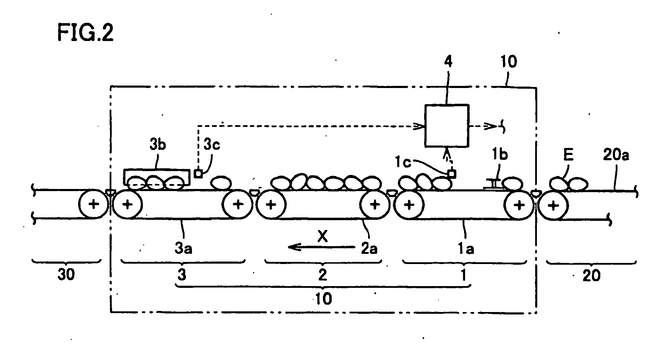

As a distributing and arranging device for agricultural and livestock products according to an embodiment of the present invention, an egg distributing and arranging device will be described. As shown in Figs. 1 and 2, an egg distributing and arranging device 10 includes a first conveyor 1, a second conveyor 2 and a third conveyor 3. Eggs E supplied from a laying house by a supply conveyor 20 are sent from first conveyor 1 through second conveyor 2 to third conveyor 3, and then fed into a predetermined processing device 30 that performs grading, washing and the like for the eggs E. A series of operations of distributing and arranging device 10 including driving of first conveyor 1 to third conveyor 3 is controlled by a control portion 4.

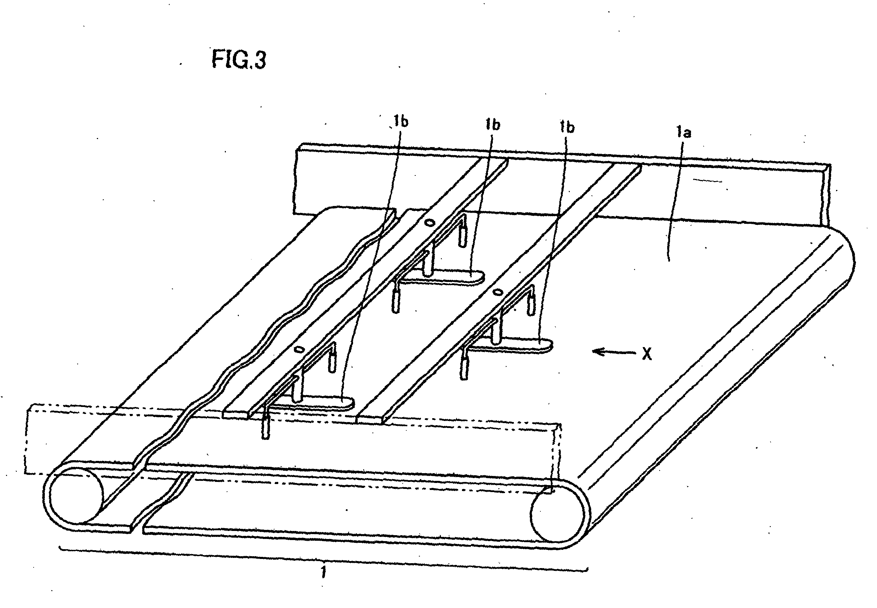

As shown in Fig. 3, first conveyor 1 includes a mesh belt 1a as a first conveyor body for transporting eggs E supplied by supply conveyor 20 (see Fig. 1) toward second conveyor 2 (see Fig. 1). For example, mesh belt 1a is formed of a resin to reduce friction against egg E and has an opening of dozen or so millimeters by several millimeters in size formed thereon with an opening ratio of about 40%. To note, the opening ratio means a ratio of the area of openings to the total area of mesh belt 1a. At a predetermined position above mesh belt 1a, a sorting portion 1b is provided to sort eggs E transported by mesh belt 1a, in the width direction that is almost perpendicular to a direction of transport X.

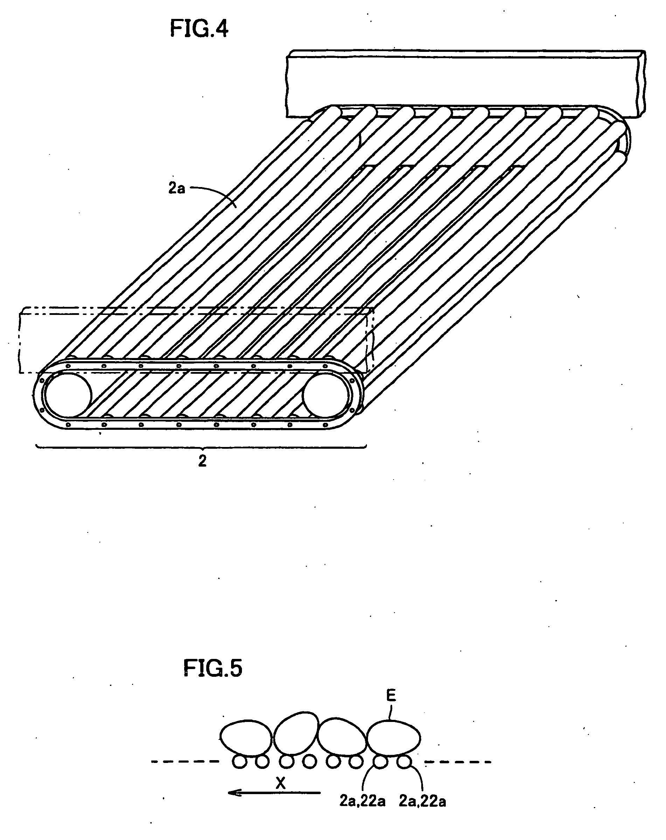

As shown in Fig. 4, second conveyor 2 includes a bar conveyor 2a as a second conveyor body for transporting eggs E transported by first conveyor 1 (see Fig. 1) toward third conveyor 3 (see Fig. 1). Bar conveyor 2a is composed of a plurality of bars 22a that extend in the width direction, and bars 22a are provided in the direction of transport with a predetermined space therebetween. As shown Fig. 5, eggs E are transported in the state where eggs E are each placed between two bars 22a respectively on the front and rear sides.

Due to small friction between mesh belt 1a and eggs E, eggs E placed on mesh belt 1a can be moved relatively easily with respect to mesh belt 1a. Meanwhile, since eggs E are each placed between two bars 22a on bar conveyor 2a, movement of eggs E is limited, as compared with the case where eggs E are placed on mesh belt 1a. More specifically, the force of bar conveyor 2a to limit movement of eggs E on second conveyor 2 is stronger than the force of mesh belt 1a to limit movement of eggs E on first conveyor 1. As shown in Fig. 5, eggs E are supported on the front and rear sides in the direction of transport by bars 22a provided perpendicular to the direction of transport so that eggs E are in particular limited in movement in the direction of transport with respect to bar conveyor 2.

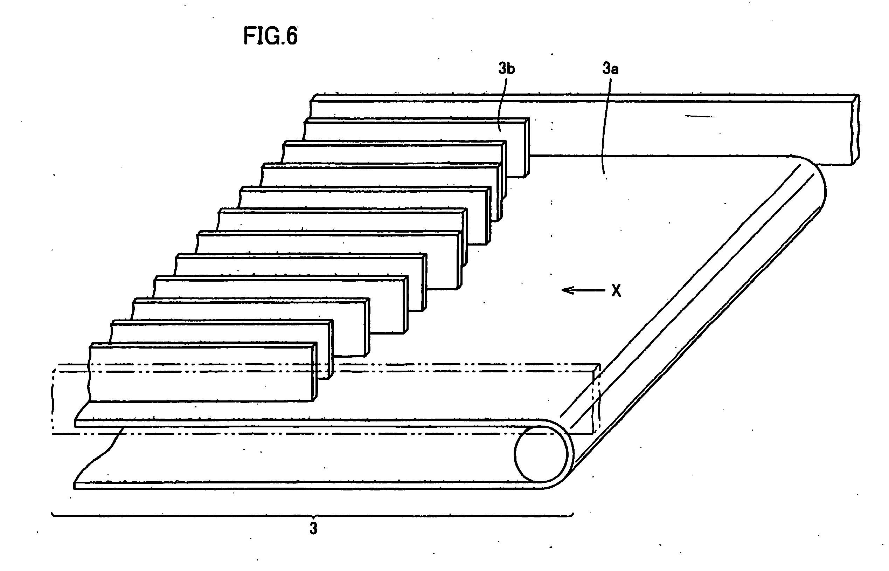

As shown in Fig. 6, third conveyor 3 includes a mesh belt 3a for transporting eggs E transported by second conveyor 2 (see Fig. 1) toward predetermined processing device 30 (see Fig. 1). The opening ratio of mesh belt 3a is almost the same as that of mesh belt 1a of first conveyor 1. In addition, a plurality of guide plates 3b are provided to divide and guide transported eggs E into twelve groups in the width direction, for example. A plurality of guide plates 3b extend in the direction of transport, and are provided with a space therebetween that allows one egg E to pass. If a pathway into which eggs E divided by guide plates 3 a is transported is referred to as a line, eggs E are divided into twelve lines by guide plates 3b in third conveyor 3. Eggs E thus divided and fed into processing device 30 are subjected to a predetermined process such as a washing process, a drying process, a grading process and the like.

In egg distributing and arranging device 10, if respective transport abilities per unit time of first conveyor 1, second conveyor 2 and third conveyor 3 described above are defined as Q1, Q2 and Q3 and transport and processing ability per unit time of processing device 30 is defined as Q4, transport ability Q1 and transport ability Q3 are set to be higher than transport ability Q2. Transport ability Q2 is set to be equal to transport and processing ability Q4 and determines the transport ability of egg distributing and arranging device 10. Egg distributing and arranging device 10 according to the present embodiment is configured as described above.

To note, transport ability is an estimated amount of eggs that can be transported per unit time in the state where eggs of a predetermined uniform size are ideally arranged. In transporting of eggs, differently sized eggs are included so that actual transport ability varies to some degree with respect to the estimated transport ability. Accordingly, the condition that transport ability Q2 is equal to transport and processing ability Q4, as defined herein, is not intended to mean mathematical equality, but is expected to include such numerical variations.

Then, operation of egg distributing and arranging device 10 will be described. The number of eggs laid at the laying house varies depending on variations among individual chickens and the number of eggs transported also varies. Therefore, first operation will be described assuming that an amount of eggs E equal to or less than transport ability Q2 of second conveyor 2, which determines the transport ability of egg distributing and arranging device 10, are transported to egg distributing and arranging device.

Eggs E laid at the laying house are transported by the supply conveyor provided therein to the egg distributing and arranging device. As shown in Fig. 1, in egg distributing and arranging device 10, eggs E placed on a supply conveyor body 20a of supply conveyor 20 are fed onto mesh belt 1a of first conveyor 1.

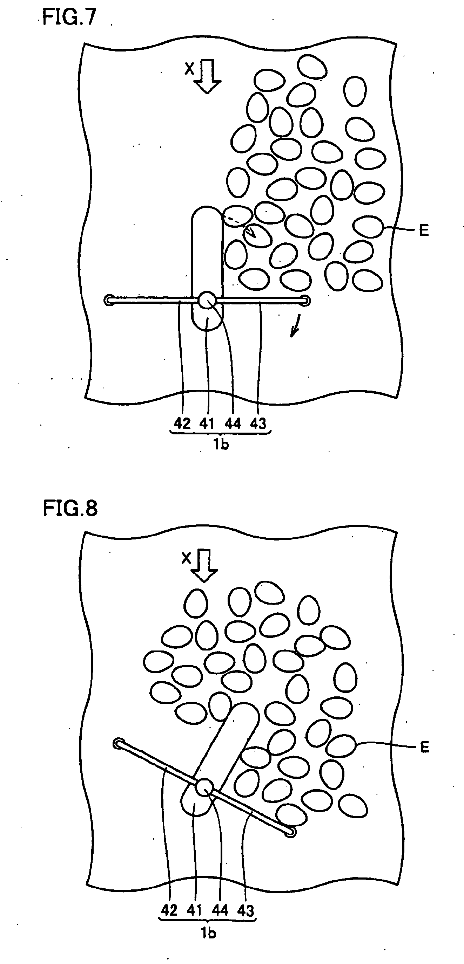

In order to prevent eggs E from being concentratedly fed into a particular line on third conveyor 3, eggs E placed and transported on mesh belt 1a are sorted in the width direction perpendicular to the direction of transport by a sorting portion 1b (see Fig. 3) provided at a predetermined position. As shown in Fig. 7, sorting portion 1b includes a first extending portion 41 that extends from upstream to downstream in the direction of transport of eggs E, and second and third extending portions 42, 43 that extend from first extending portion 41 to the width direction, respectively. Sorting portion 1b is pivotally supported such that contact of eggs E with second extending portion 42 or third extending portion 43 causes sorting portion 1b to pivot about a shaft portion 44.

For example, as shown in Fig. 7, when eggs E are fed to the first conveyor in the state where eggs E are concentrated at one side in the width direction (the right side of the drawing), among eggs E transported in the concentrated manner, eggs E located at the downstream side contact third extending portion 43 of sorting portion 1b. Accordingly, as shown in Fig. 8, sorting portion 1b is pivotally moved clockwise to cause an upstream side end of first extending portion 41 to be directed toward the side where eggs E are gathered and halve the gathered eggs E. Among the halved eggs E, eggs E located at the downstream side remain concentrated at the one side and are transported along the side.

In contrast, eggs E located at the upstream side are sorted in the direction opposite the eggs E located at the downstream side, and transported along the other side (the left side of the drawing). On first conveyor 1, eggs E unevenly distributed in the width direction and transported are halved to one side and the other side in the width direction by one sorting portion 1b provided at the upstream side. Then, eggs E sorted to the one side and the other side are further halved in the width direction by sorting portion 1b located at the downstream side.

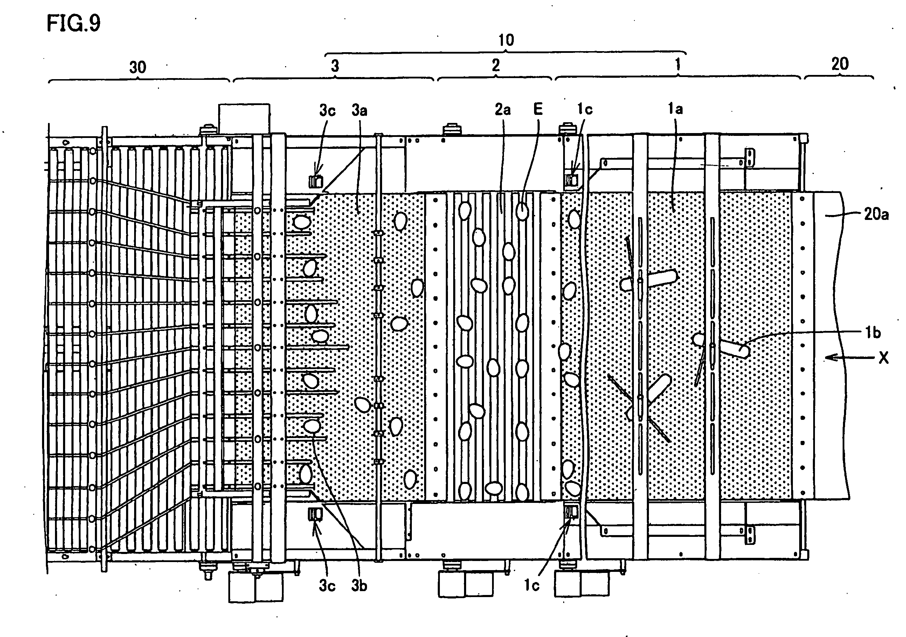

Thus, as shown in Fig. 9, eggs E sorted in the width direction on first conveyor 1 are fed into second conveyor 2 in the state where they are sorted in the width direction. On second conveyor 2, as shown in Fig. 5, eggs E are supported on the front and rear sides in the direction of transport so that eggs E are transported in the state where eggs E are limited in movement in the direction of transport with respect to bar conveyor 2a. Limiting movement of eggs E in the direction of transport with respect to bar conveyor 2a reduces occurrence of a phenomenon where a certain egg E moves other eggs E located before and after the certain egg, maintaining the state where eggs E are sorted in the width direction.

Then, eggs E that are transported by second conveyor 2 while maintaining the state where eggs E are arranged in the width direction are fed into third conveyor 3. On third conveyor 3, eggs E sorted in the width direction are sent by mesh belt 3a into any of twelve lines separated by guide plates 3b and are transported while being guided by each guide plate 3b. Thus, eggs E sorted and transported by third conveyor 3 are fed into processing device 30, where a predetermined process such as a washing process, a drying process, a grading process and the like is performed smoothly and efficiently

Next, second operation will be described assuming that eggs E beyond transport ability Q2 of second conveyor 2, which determines the transport ability of distributing and arranging device 10, are transported to egg distributing and arranging device 10: At first, eggs E transported from the laying house by the supply conveyor and fed into first conveyor 1 are sorted in the width direction by sorting portion 1b, similarly to the case as described above. Eggs E sorted in the width direction on first conveyor 1 are fed into second conveyor 2 while maintaining the state where they are sorted in the width direction.

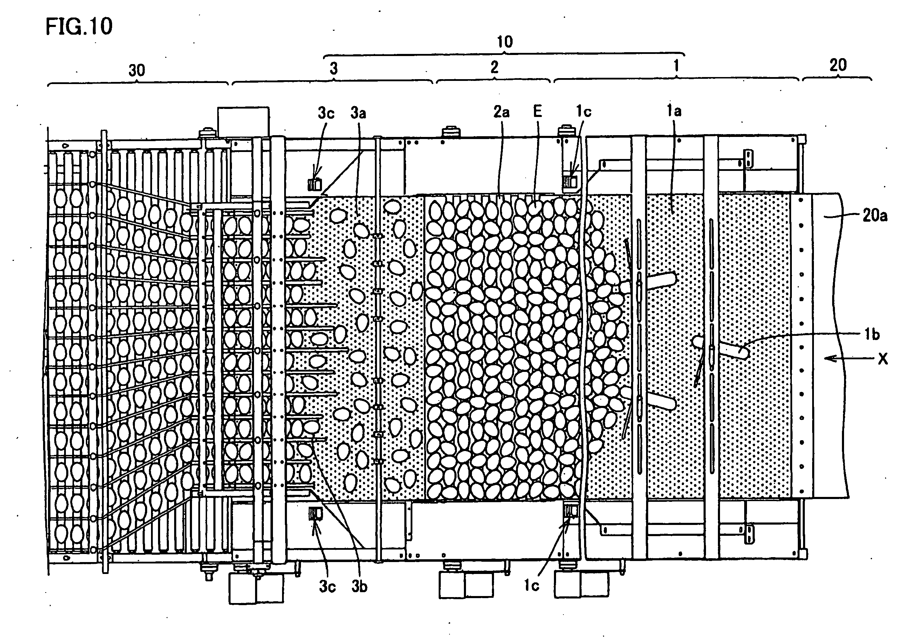

More specifically, in this case, as shown in Fig. 10, eggs E sorted in the width direction on first conveyor 1 are in the state where the eggs are arranged with almost no clearance therebetween in the width direction on first conveyor 1. On second conveyor 2, eggs E have no clearance therebetween in the width direction while eggs E are successively transported with movement of eggs E limited with respect to bar conveyor 2a.

Further, in this case, since eggs E beyond transport ability Q2 of second conveyor 2 are transported, eggs E that cannot be transported by second conveyor 2 will be accumulated downstream of first conveyor 1. At this stage, since mesh belt 1a of first conveyor 1 is formed of a resin with relatively small friction against eggs E, mesh belt 1a can be driven without being stopped under eggs E which are being accumulated such that eggs E transported by a supply belt can be transported toward downstream and eggs E that cannot be transported by second conveyor 2 can be gradually accumulated from the downstream side to the upstream side. More specifically, first conveyor 1 serves as a buffer to temporarily store eggs E transported beyond transport ability Q2 of second conveyor 2.

Thus, even when eggs E beyond transport ability Q2 of second conveyor 2 are transported, the amount of eggs E corresponding to processing and transport ability Q4 of processing device 30 can be fed into third conveyor 3. On third conveyor 3, eggs E sorted in the width direction with almost no clearance therebetween are almost evenly fed by mesh belt 3a into twelve lines separated by guide plates 3b and are transported while being guided by each guide plate 3b.

The amount of eggs E corresponding to transport and processing ability Q4 of processing device 30 is fed into third conveyor 3 where eggs E are sorted and transported. Then eggs E are transported to processing device 30. In processing device 30 into which the amount of eggs E corresponding to transport and processing ability Q4 of processing device 30 is fed, a predetermined process such as a washing process, a drying process, a grading process and the like is performed smoothly and efficiently.

In egg distributing and arranging device 10 described above, second conveyor 2 that determines the transport ability of egg distributing and arranging device 10 and is set to transport ability Q2 equal to transport and processing ability Q4 of processing device 30, supports eggs E by bar 22a on the front and rear sides in the direction of transport to limit movement of eggs E with respect to bar conveyor 2a. This reduces occurrence of a phenomenon where a certain egg E moves other eggs E located before and after the certain egg E such that eggs E can be transported while maintaining the state where the eggs are sorted in the width direction.

Meanwhile, mesh belt 1a of first conveyor 1 is formed of a resin with relatively small friction against eggs E. This enables mesh belt 1a to be driven and slid under eggs E that are being accumulated beyond transport ability Q2 when eggs E beyond transport ability Q2 of second conveyor 2 are transported, in order to prevent eggs E from being fed into second conveyor 2 with excessive force. Thus, first conveyor I can serve as a buffer to temporarily store eggs E.

Accordingly, even when eggs E beyond transport ability Q2 of second conveyor 2 are fed from the supply conveyor into first conveyor 1, eggs E beyond transport ability Q2 (transport and professing ability Q4 of processing device 30) can be prevented from being fed from second conveyor 2 into third conveyor 3. As a result, on third conveyor 3 having transport ability Q3 higher than that of second conveyor 2, when eggs are divided into a predetermined number of lines in the width direction, occurrence of a congestion phenomenon or the like caused by transport of a large amount of eggs E can be reliably reduced such that eggs E can be fed into processing device 30 without damage or breakage of eggs E.

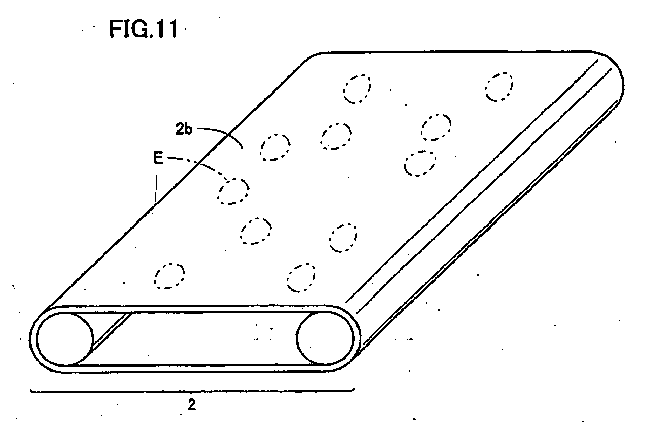

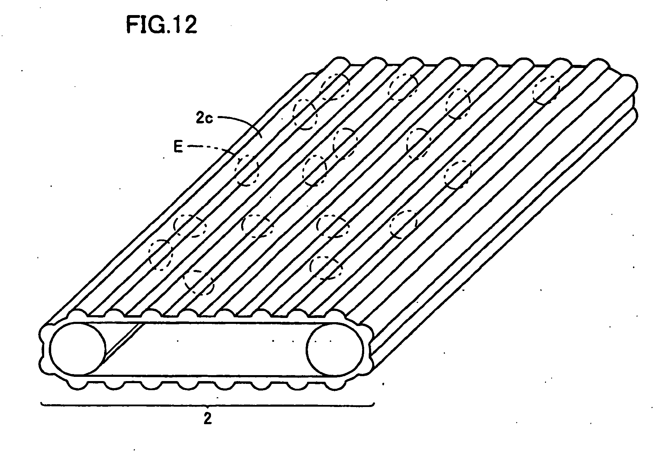

To note, for egg distributing and arranging device 10 as described above, bar conveyor 2a has been described as an example of the second conveyor body of second conveyor 2. However, if eggs E can be transported by the second conveyor body in the state where the force of the second conveyor body to limit movement of eggs E is set to be stronger than the force of mesh conveyor 1 a as the first conveyor body to limit movement of eggs E, a rubber belt 2b formed of rubber with relatively high friction against eggs E can be applied, as shown in Fig. 11, for example. In addition, as shown in Fig. 12, a synchronous belt 2c can be applied that has projecting portions extending in the width direction and provided with a predetermined space in the direction of transport, for example.

Friction force between an egg and mesh belt 1a is relatively small. However, when the number of eggs E staying and accumulated in first conveyor 1 is significantly increased, it is expected that friction force between mesh belt 1a slidingly driven under eggs E and accumulated eggs E as a whole will be large to force eggs E on second conveyor 2 into third conveyor 3.

This causes eggs E beyond transport and processing ability Q4 of processing device 30 to be fed into third conveyor 3. In order to prevent such a case, as shown in Fig. 1, for example, a sensor 1c may be provided to sense the state of eggs E transported by first conveyor 1 such that supply conveyor 20 will be stopped when sensor 1c senses significant increase in the number of accumulated eggs E. Further, a sensor 3 c may be provided at third conveyor 3 to sense the state of transport of eggs E to stop second conveyor 2 depending on the situation.

Although eggs have been described as an example of an object to be distributed and arranged in the above described distributing and arranging device, the distributing and arranging device is not limited to distributing and arranging of eggs, but can be applied to distributing and arranging of agricultural and livestock products such as fruits or vegetables being spherical in shape.

It should be understood that the embodiments disclosed herein are illustrative and non-restrictive. The scope of the present invention is defined by the terms of the claims, rather than the description above, and is intended to include any modifications within the scope of the claims.

### INDUSTRIAL APPLICABILITY

The present invention will be effectively used for agriculture and stock farming including poultry farming.

## Claims

1. A distributing and arranging device for agricultural and livestock products (E) for dividing the agricultural and livestock products supplied by a supply conveyor (20) into predetermined lines, comprising:
a first conveyor (1) including a first conveyor body (1a) for transporting agricultural and livestock products (E) randomly supplied by the supply conveyor (20);
a second conveyor (2) provided downstream of said first conveyor (1) and including a second conveyor body (2a, 2b, 2c) for transporting the agricultural and livestock products (E) transported by said first conveyor (1); and
a third conveyor (3) provided downstream of said second conveyor (2) for transporting the agricultural and livestock products (E) transported by said second conveyor (2) while dividing the agricultural and livestock products into predetermined lines arranged in a width direction perpendicular to a direction of transport, to feed the agricultural and livestock products into a processing device performing a predetermined process for the agricultural and livestock products (E), **characterized in that**
when respective transport abilities per unit time of said first conveyor (1), said second conveyor (2) and said third conveyor (3) are defined as Q1, Q2 and Q3, and transport and processing ability per unit time of said processing device is defined as Q4,
said transport ability Q1 and said transport ability Q3 are each higher than said transport ability Q2,
said transport ability Q2 is equal to said transport and processing ability Q4, and
a force of the second conveyor body (2a, 2b, 2c) to limit movement of the agricultural and livestock products (E) on said second conveyor is set to be stronger than a force of said first conveyor body (1a) to limit movement of the agricultural and livestock products (E) on said first conveyor (1).

2. The distributing and arranging device according to claim 1, wherein
said first conveyor (1) includes a sorting portion for sorting the agricultural and livestock products (E) randomly transported by the supply conveyor (20), in said width direction.

3. The distributing and arranging device according to claim 1 or 2, wherein
said second conveyor (2) includes a function to transport the agricultural and livestock products (E) in a state where movement of the agricultural and livestock products (E) with respect to said second conveyor body (2a, 2b, 2c) is limited in the direction of transport.

4. The distributing and arranging device according to one of claims 1 to 3, wherein
said first conveyor body (1a) includes a mesh belt (1a) and said second conveyor body (2a, 2b, 2c) includes a bar conveyor (2a)

## Patentansprüche

1. Eine Vorrichtung zur Verteilung und Anordnung von Produkten aus Landwirtschaft und Viehzucht zum Aufteilen der durch eine Zuführ-Förderanlage (20) zugeführten Produkte (E) aus Landwirtschaft und Viehzucht auf vorbestimmte Linien, umfassend:
eine erste Fördervorrichtung (1) mit einem ersten Förderkörper (1a) zum Transportieren von Produkten aus Landwirtschaft und Viehzucht (E), die wahllos durch die Zuführ-Förderanlage (20) zugeführt werden;
eine zweite Fördervorrichtung (2), die gegenüber der ersten Fördervorrichtung (1) nachgelagert vorgesehen ist und einen zweiten Förderkörper (2a, 2b, 2c) zum Transportieren der Produkte (E) aus Landwirtschaft und Viehzucht aufweist, die durch die erste Fördervorrichtung transportiert werden; und
eine dritte Fördervorrichtung (3), die gegenüber der zweiten Fördervorrichtung (2) nachgelagert vorgesehen ist und die durch die zweite Fördervorrichtung (2) transportierten Produkte (E) aus Landwirtschaft und Viehzucht transportiert, während sie die Produkte (E) aus Landwirtschaft und Viehzucht auf vorbestimmte Linien aufteilt, die in einer Querrichtung senkrecht zur Transportrichtung angeordnet sind, um die Produkte aus Landwirtschaft und Viehzucht zu einer Verarbeitungsvorrichtung zu fördern, die eine vorbestimmte Verarbeitung an den Produkten (E) aus Landwirtschaft und Viehzucht durchführt,
**dadurch gekennzeichnet, dass**
wenn entsprechende Transportvermögen der ersten Fördervorrichtung (1), der zweiten Fördervorrichtung (2) und der dritten Fördervorrichtung (3) pro Zeiteinheit mit Q1, Q2 und Q3 bezeichnet werden, und das Transport- und Verarbeitungsvermögen der Verarbeitungsvorrichtung pro Zeiteinheit mit Q4 bezeichnet wird,
das Transportvermögen Q1 und das Transportvermögen Q3 jeweils größer sind als das Transportvermögen Q2,
das Transportvermögen Q2 gleich dem Transport- und Verarbeitungsvermögen Q4 ist, und
eine Kraft des zweiten Förderkörpers (2a, 2b, 2c) zum Begrenzen der Bewegung der Produkte (E) aus Landwirtschaft und Viehzucht auf der zweiten Fördervorrichtung so eingestellt ist, dass sie stärker ist als eine Kraft des ersten Förderkörpers (1a), mit der die Bewegung der Produkte (E) aus Landwirtschaft und Viehzucht auf der ersten Fördervorrichtung begrenzt wird.

2. Vorrichtung zur Verteilung und Anordnung gemäß Anspruch 1, wobei
die erste Fördervorrichtung (1) einen Sortierabschnitt zum Sortieren der Produkte (E) aus Landwirtschaft und Viehzucht in der Querrichtung aufweist, die wahllos durch die Zuführ-Förderanlage (20) transportiert werden.

3. Vorrichtung zur Verteilung und Anordnung gemäß Anspruch 1 oder 2, wobei
die zweite Fördervorrichtung (2) eine Funktion besitzt, mit welcher die Produkte (E) aus Landwirtschaft und Viehzucht in einem Zustand transportiert werden, in dem die Bewegung der Produkte (E) aus Landwirtschaft und Viehzucht in Bezug auf den zweiten Förderkörper (2a, 2b, 2c) in Transportrichtung begrenzt ist.

4. Vorrichtung zur Verteilung und Anordnung gemäß einem der Ansprüche 1 bis 3, wobei
der erste Förderkörper (1a) einen Maschengurt (1a) und der zweite Förderkörper (2a, 2b, 2c) einen Stangenförderer (2a) aufweist.

## Revendications

1. Dispositif de distribution et de rangement pour des produits agricoles et d'élevage (E) pour diviser les produits agricoles et d'élevage alimentés par un convoyeur d'alimentation (20) dans des conduites prédéterminées, comprenant :
un premier convoyeur (1) comprenant un premier corps de convoyeur (1a) pour transporter les produits agricoles et d'élevage (E), alimentés de manière aléatoire par le convoyeur d'alimentation (20) ;
un deuxième convoyeur (2) prévu en aval dudit premier convoyeur (1) et comprenant un deuxième corps de convoyeur (2a, 2b, 2c) pour transporter les produits agricoles et d'élevage (E) transportés par ledit premier convoyeur (1) ; et
un troisième convoyeur (3) prévu en aval dudit deuxième convoyeur (2) pour transporter les produits agricoles et d'élevage (E) transportés par ledit deuxième convoyeur (2) tout en divisant les produits agricoles et d'élevage dans des conduites prédéterminées agencées dans le sens de la largeur perpendiculaire à une direction de transport, pour alimenter les produits agricoles et d'élevage dans un dispositif de traitement réalisant un procédé prédéterminé pour les produits agricoles et d'élevage (E), **caractérisé en ce que :**
lorsque les capacités de transport respectives par unité de temps dudit premier convoyeur (1), dudit deuxième convoyeur (2) et dudit troisième convoyeur (3) sont définies comme étant Q1, Q2, et Q3, et que la capacité de transport et de traitement par unité de temps dudit dispositif de traitement est définie comme étant Q4,
ladite capacité de transport Q1 et ladite capacité de transport Q3 sont chacune supérieures à ladite capacité de transport Q2,
ladite capacité de transport Q2 est égale à ladite capacité de transport et de traitement Q4, et
une force du deuxième corps de convoyeur (2a, 2b, 2c) pour limiter le mouvement des produits agricoles et d'élevage (E) sur ledit deuxième convoyeur est déterminée pour être plus puissante qu'une force dudit premier corps de convoyeur (1a) afin de limiter le mouvement des produits agricoles et d'élevage (E) sur ledit premier convoyeur (1).

2. Dispositif de distribution et de rangement selon la revendication 1, dans lequel :
ledit premier convoyeur (1) comprend une partie de triage pour trier les produits agricoles et d'élevage (E) transportés de manière aléatoire par le convoyeur d'alimentation (20), dans ledit sens de la largeur.

3. Dispositif de distribution et de rangement selon la revendication 1 ou 2, dans lequel :
ledit deuxième convoyeur (2) comprend une fonction pour transporter les produits agricoles et d'élevage (E) dans un état dans lequel le mouvement des produits agricoles et d'élevage (E) par rapport audit deuxième corps de convoyeur (2a, 2b, 2c) est limité dans la direction de transport.

4. Dispositif de distribution et de rangement selon l'une quelconque des revendications 1 à 3, dans lequel :
le premier corps de convoyeur (1a) comprend un tapis métallique (1a) et ledit deuxième corps de convoyeur (2a, 2b, 2c) comprend un convoyeur à barre (2a).
